# EUROPÄISCHE PATENTSCHRIFT

(11) **EP 1 594 730 B1**
(45) Veröffentlichungstag und Bekanntmachung des Hinweises auf die Patenterteilung: **01.12.2010**
(21) Anmeldenummer: 03785870.1
(22) Anmeldetag: 18.12.2003
(51) Int. Cl.: B60T 8/26, B60T 8/00

(54) **INTEGRALBREMSSYSTEM FÜR MOTORRÄDER**
INTEGRAL BRAKING SYSTEM FOR MOTORCYCLES
SYSTEME DE FREINAGE INTEGRAL POUR MOTOCYCLETTES

(30) Priorität: 21.02.2003 DE 10307339
(43) Veröffentlichungstag der Anmeldung: 16.11.2005
(73) Patentinhaber: Bayerische Motoren Werke Aktiengesellschaft, 80809 München (DE)
(72) Erfinder: WAGNER, Hans-Albert, 81737 München (DE); KIRCHBERGER, Andreas, 85778 München (DE); BEULICH, Siegfried, 82393 Iffeldorf (DE)
(86) Internationale Anmeldenummer: PCT/EP2003/014477
(87) Internationale Veröffentlichungsnummer: WO 2004/074060

(56) Entgegenhaltungen:
- EP-A- 0 687 621
- EP-A- 1 277 635
- US-A- 6 070 949
- US-B1- 6 309 029

## Beschreibung

Die Erfindung betrifft ein Integralbremssystem für Motorräder, umfassend eine auf das eine Rad einwirkende hydraulische Bremsanlage, die über eine Hydraulikleitung mit einem Bremszylinder verbunden ist, der mit einem ersten Bremshebel steuerbar ist, eine auf das andere Rad einwirkende Bremsanlage, der ein Aktuator zugeordnet ist, der sowohl mit dem ersten Bremshebel als auch mit einem zweiten Bremshebel steuerbar ist, und eine Regeleinrichtung zur gesteuerten Verteilung der Bremskraft auf die beiden Räder.

Bei einem bekannten Integralbremssystem dieser Art arbeitet sowohl die auf das Vorderrad als auch die auf das Hinterrad einwirkende Bremsanlage hydraulisch. Dabei ist der Aktuator der auf das Hinterrad einwirkenden Bremsanlage zugeordnet. Der Aktuator umfaßt ein Hauptbremsventit, das über getrennte Hydraulikleitungen mit dem Handbremshebel und mit dem Fußbremshebel verbunden ist. Dieser Hauptbremszylinder enthält ein hydraulisches Regelventil, das die Regeleinrichtung zur gesteuerten Verteilung der Bremskraft auf die beiden Räder bildet. Mit diesem bekannten Integralbremssystem ist es möglich, mit dem Fußbremshebel die dem Hinterrad zugeordnete hydraulische Bremsanlage allein zu betätigen oder mit dem Handbremshebel sowohl die dem Vorderrad als auch die dem Hinterrad zugeordnete hydraulische Bremsanlage gemeinsam zu betätigen. In diesem Fall bewirkt die von dem hydraulischen Regelventil gebildete Regeleinrichtung eine gesteuerte Verteilung der Bremskraft auf die beiden Räder. Eine solche hydraulische Regeleinrichtung, die die Bremskraft angenähert an die ideale, dynamische Bremskraftverteilung auf Vorder- und Hinterrad verteilt, ist aber sehr kompliziert und kostenaufwendig. In der Praxis hat sich gezeigt, dass eine als ideal angesehene Verteilung der dynamischen Bremskraft auf Vorder- und Hinterrad mit einem rein hydraulischen Regelventil nicht erreichbar ist.

Dokument US 6,309,029 B1 offenbart ein Integralbremssystem gemäß dem Oberbegriff des Anspruchs 1.

Der Erfindung liegt die Aufgabe zugrunde, ein gattungsgemäßes Integralbremssystem für Motorräder zu schaffen, das bei geringen Gestehungskosten eine optimale Verteilung der dynamischen Bremskraft auf Vorder- und Hinterrad ermöglicht.

Erfindungsgemäß ist ein diesen Anforderungen entsprechendes Integralbremssystem gekennzeichnet durch die Merkmale des Anspruchs 1.

Bei dem erfindungsgemäßen Integralbremssystem ersetzt der Aktuator den das hydraulische Regelventil umfassenden Hauptbremszylinder, und eine hydraulische Ansteuerung ist entbehrlich.

Der auf eine Betätigung der hydraulischen Bremsanlage ansprechende Sensor kann beispielsweise den Betätigungsweg des ersten Bremshebels oder die auf diesen ausgeübte Gegenkraft ermitteln. Der Sensor könnte aber auch die Verzögerung des Motorrades ermitteln. Besonders vorteilhaft ist ein den Druck in der Hydraulikleitung ermittelnder Sensor.

Mit dem erfindungsgemäßen Integralbremssystem wird auch eine Antiblockierfunktion an beiden Rädern realisiert. Zu diesem Zweck ist vorgesehen, dass den beiden Rädern jeweils ein Antiblockiersensor zugeordnet ist, der über Steuerleitungen mit dem Steuergerät verbunden ist, und dass in der Hydraulikleitung eine dem Drucksensor vorgeschaltete Druckmindereinrichtung angeordnet ist, die über eine Steuerleitung mit dem Steuergerät verbunden ist.

Bei dem erfindungsgemäßen Integralbremssystem kann die auf das zweite Rad einwirkende Bremsanlage sowohl hydraulisch als auch mechanisch betätigt werden. Bei der ersten Alternative ist vorgesehen, dass der Aktuator als Pumpe ausgebildet und über eine Hydraulikleitung mit der Bremsanlage verbunden ist. Bei der zweiten Alternative ist vorgesehen, dass der Aktuator ein elektrischer Stellmotor ist, der mit der Bremsanlage mechanisch verbunden ist. Das Integralbremssystem ist vorzugsweise so ausgebildet, dass mit dem Handbremshebel sowohl die dem Vorder- als auch dem Hinterrad zugeordnete Bremsanlage betätigt werden kann, wogegen mit dem Fußbremshebel die dem Hinterrad zugeordnete Bremsanlage allein betätigt werden kann.

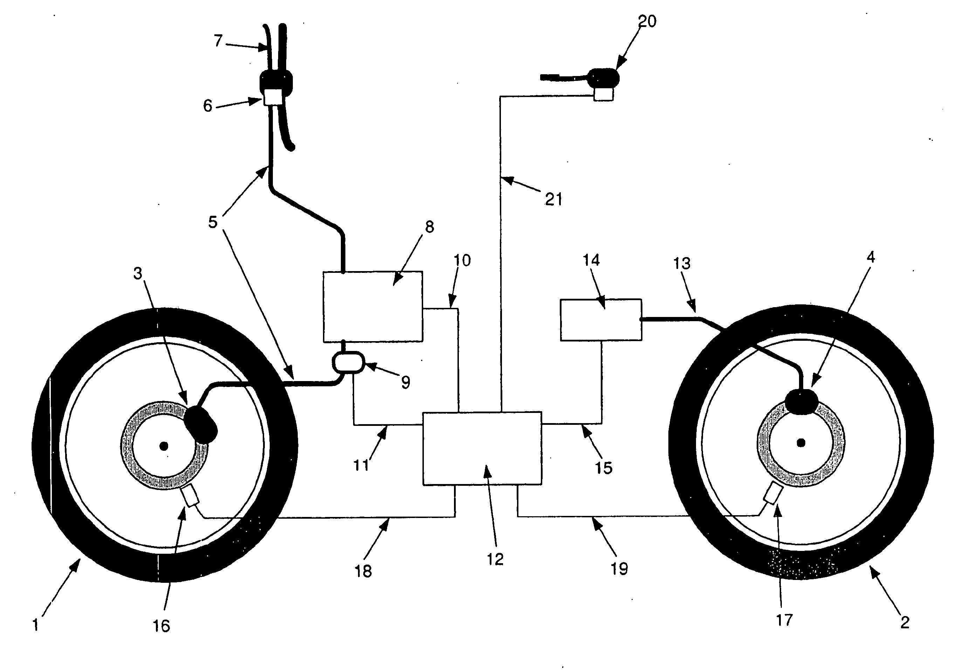

Die Erfindung wird nachfolgend anhand eines in der Zeichnung schematisch dargestellten Ausführungsbeispiels näher erläutert.

In der einzigen Figur der Zeichnung ist das Vorderrad 1 und das Hinterrad 2 eines Motorrades schematisch dargestellt, dem jeweils eine Scheibenbremse 3 bzw. 4 zugeordnet ist. Die dem Vorderrad 1 zugeordnete Bremsanlage ist konventionell ausgebildet, d. h. der Bremssattel der Scheibenbremse 3 ist über eine Hydraulikleitung 5 mit einem Hauptbremszylinder 6 verbunden, der mit einem Handbremshebel 7 steuerbar ist. In der Hydraulikleitung 5 ist eine Druckmindereinrichtung 8 angeordnet, und zwischen dieser und der Scheibenbremse 3 ist ein Drucksensor 9 angeordnet. Die Druckmindereinrichtung 8 und der Drucksensor 9 sind über elektrische Steuerleitungen 10 und 11 mit einem elektronischen Steuergerät 12 verbunden. Die dem Hinterrad 2 des (nicht näher gezeigten) Motorrades zugeordnete Scheibenbremse 4 ist über eine Hydraulikleitung 13 mit einem von einer elektrischen Pumpe gebildeten Aktuator 14 verbunden. Der Aktuator 14 ist über eine elektrische Steuerleitung 15 mit dem Steuergerät 12 verbunden. Dem Vorderrad 1 und dem Hinterrad 2 ist jeweils ein Antiblockiersensor 16 bzw. 17 zugeordnet, der über eine elektrische Steuerleitung 18 bzw. 19 mit dem Steuergerät 12 verbunden ist. Ein Fußbremshebel 20 des Motorrades ist über eine elektrische Steuerleitung 21 mit dem Steuergerät 12 verbunden.

Das Steuergerät 12 ist so programmiert, dass es eine Doppelfunktion zur optimalen Verteilung der Bremskraft auf Vorder- und Hinterrad und zur Verringerung der Bremskraft beim Blockieren eines Rades erfüllt.

Nachfolgend wird die Integralbremse mit dem vorstehend beschriebenen Aufbau näher erläutert.

Wenn der Handbremshebel 7 des Motorrades betätigt wird, dann wird auf konventionelle Weise in der Hydraulikleitung 5 ein Bremsdruck aufgebaut, so dass die dem Vorderrad 1 zugeordnete Scheibenbremse 3 betätigt wird. Der Druckanstieg in der Hydraulikleitung 5 wird vom Drucksensor 9 ermittelt, und dieser sendet ein entsprechendes Signal über die Steuerleitung 11 an das Steuergerät 12. Das Steuergerät 12 ermittelt aufgrund dieses Signals die ideale Bremskraft für das Hinterrad 2 und sendet über die Steuerleitung 15 ein entsprechendes Signal an den Aktuator 14. Der Aktuator 14 bzw. die elektrische Pumpe erzeugt daraufhin in der Hydraulikleitung 13 den zur Aktivierung der hinteren Scheibenbremse 4 erforderlichen Bremsdruck. Durch eine Betätigung des Handbremshebels 7 können somit die vordere und die hintere Scheibenbremse 3 und 4 gemeinsam betätigt werden, wobei das elektronische Steuergerät 12 für eine optimale Aufteilung der auf das Vorder- und Hinterrad ausgeübten Bremskraft sorgt.

Wenn der Fußbremshebel 20 betätigt wird, dann empfängt das Steuergerät 12 über die Steuerleitung 21 ein Bremssignal, und der Aktuator 14 wird vom Steuergerät 12 über die Steuerleitung 15 angesteuert, um in der Hydraulikleitung 13 den entsprechenden Bremsdruck zu erzeugen. Durch Betätigen des Fußbremshebels 20 ist es daher möglich, allein das Hinterrad 2 zu bremsen.

Falls das Vorderrad 1 bei einem Bremsvorgang blockieren sollte, dann sendet der Antiblockier-Sensor 16 ein entsprechendes Signal an das Steuergerät 12. Das Steuergerät 12 steuert über die Steuerleitung 10 die Druckmindereinrichtung 8 an, so dass der Bremsdruck in der Hydraulikleitung 5 reduziert wird, um die Bremswirkung der vorderen Scheibenbremse 3 zu verringern. Dieser Druckabfall in der Hydraulikleitung 5 wird vom Drucksensor 9 registriert, der ein entsprechendes Signal an das Steuergerät 12 sendet. Das Steuergerät 12 ermittelt sodann den zu dem verminderten Druck in der Hydraulikleitung 5 passenden verminderten Druck in der Hydraulikleitung 13 und sendet ein entsprechendes Steuersignal an den Aktuator 14. Auf diese Weise kann ein Blockieren des Vorderrades 1 verhindert werden, und gleichzeitig kann die als ideal angesehene dynamische Bremskraftverteilung auf Vorder- und Hinterrad beibehalten werden.

Falls das Hinterrad zum Blockieren neigen sollte, dann läuft der vorstehend beschriebene Regelungsvorgang der Bremskraft in umgekehrter Reihenfolge ab.

Wenn durch Betätigen des Fußbremshebels 20 allein mit der hinteren Scheibenbremse 4 gebremst wird, dann wird vom Steuergerät 12 lediglich der Aktuator 14 angesteuert, um den Bremsdruck in der Hydraulikleitung 13 in der erforderlichen Weise zu verringern.

Es ist erkennbar, dass bei einem Ausfall des den Sensor 9, das Steuergerät 12 und den Aktuator 14 umfassenden Systems die Funktionsfähigkeit der dem Vorderrad zugeordneten hydraulischen Bremsanlage 3 erhalten bleibt.

Abweichend von dem gezeigten Ausführungsbeispiel könnte der Aktuator 14 auch von einem elektrischen Bremszylinder gebildet sein. Der Aktuator 14 könnte aber auch ein elektrischer Stellmotor sein, der mit der hinteren Scheibenbremse 4 mechanisch verbunden ist.

### Bezugszeichenliste:

- 1: Vorderrad
- 2: Hinterrad
- 3: Scheibenbremse von 1
- 4: Scheibenbremse von 2
- 5: Hydraulikleitung von 3
- 6: Hauptbremszylinder
- 7: Handbremshebel
- 8: Druckmindereinrichtung
- 9: Drucksensor
- 10: Steuerleitung von 8
- 11: Steuerleitung von 9
- 12: Steuergerät
- 13: Hydraulikleitung von 4
- 14: Aktuator
- 15: Steuerleitung von 14
- 16: Antiblockier-Sensor von 1
- 17: Antiblockier-Sensor von 2
- 18: Steuerleitung von 16
- 19: Steuerleitung von 17
- 20: Fußbremshebel
- 21: Steuerleitung von 20

## Patentansprüche

1. Integralbremssystem für Motorräder, umfassend eine auf das eine erste Rad (1) einwirkende hydraulische erste Bremsanlage (3), die über eine Hydraulikleitung (5) mit einem Hauptbremszylinder (6) verbunden ist, der mit einem ersten Bremshebel (7) steuerbar ist, eine auf das andere zweite Rad (2) einwirkende zweite Bremsanlage (4), der ein Aktuator (14) zugeordnet ist, der sowohl mit dem ersten Bremshebel (7) als auch mit einem zweiten Bremshebel (20) steuerbar ist, eine Regeleinrichtung (12) zur gesteuerten Verteilung der Bremskraft auf die beiden Räder (1,2) und ein die Regeleinrichtung enthaltendes elektronisches Steuergerät (12), das über elektrische Steuerleitungen (11, 15, 21) mit einem auf den Druck in der Hydraulikleitung (5) ansprechenden Sensor (9), mit dem Aktuator (14) und mit dem zweiten Bremshebel (20) verbunden ist, wobei das Steuergerät (12) den Aktuator (14) in Abhängigkeit von dem Ausgangssignal des Drucksensors (9) oder bei einer Betätigung des zweiten Bremshebels (20) ansteuert, um die auf das zweite Rad (2) einwirkende Bremsanlage (4) zu aktivieren, **dadurch gekennzeichnet, daß** den beiden Rädern (1, 2) jeweils ein Antiblockiersensor (16, 17) zugeordnet ist, der über Steuerleitungen (18, 19) mit dem Steuergerät (12) verbunden ist, und daß in der Hydraulikleitung (5) eine dem Drucksensor (9) vorgeschaltete Druckmindereinrichtung (8) angeordnet ist, die über eine Steuerleitung (10) mit dem Steuergerät (12) verbunden ist, wobei das Steuergerät (12) in Abhängigkeit vom Ausgangssignal des Drucksensors (9) den Aktuator (14) derart steuert, dass in der auf das zweite Rad (2) einwirkenden zweiten Bremsanlage (4) die einer optimalen Verteilung entsprechende Bremskraft erzeugt wird, und dass bei einer Änderung der in der ersten Bremsanlage (3) erzeugten Bremskraft die in der zweiten Bremsanlage (4) erzeugte Bremskraft derart verändert wird, dass die ideale dynamische Verteilung der Bremskraft beibehalten wird.

2. Integralbremssystem nach Anspruch 1, **dadurch gekennzeichnet, daß** der Aktuator (14) als Pumpe oder als elektrischer Bremszylinder ausgebildet und über eine Hydraulikleitung (13) mit der auf das zweite Rad (2) einwirkenden zweiten Bremsanlage (4) verbunden ist.

3. Integralbremssystem nach Anspruch 1, **dadurch gekennzeichnet, daß** der Aktuator (14) ein elektrischer Stellmotor ist, der mit der auf das zweite Rad (2) einwirkenden zweiten Bremsanlage (4) mechanisch verbunden ist.

4. Integralbremssystem nach einem der vorhergehenden Ansprüche, **dadurch gekennzeichnet, daß** das erste Rad (1) das Vorderrad und das zweite Rad (2) das Hinterrad ist.

5. Integralbremssystem nach einem der vorhergehenden Ansprüche, **dadurch gekennzeichnet, daß** bei einem Ausfall des Systems (9, 12, 14) die Funktionsfähigkeit der hydraulischen ersten Bremsanlage (3) erhalten bleibt.

## Claims

1. An integral brake system for motorcycles, comprising a hydraulic first brake system (3) which acts on a first wheel (1) and is connected by a hydraulic line (5) to a main brake cylinder (6), which can be controlled with a first brake lever, a second brake system (4) which acts on the other second wheel (2) and with which an actuator (14) is associated, which can be controlled both with the first brake lever (7) and with a second brake lever (20), a regulating device (12) for the controlled distribution of the brake force to the two wheels (1, 2) and an electronic controller (12) which contains the regulating device and is connected by means of electric control lines (11, 15, 21) to a sensor (9) responding to the pressure in the hydraulic line (5), to the actuator (14) and to the second brake lever (20), the controller (12) activating the actuator (14) as a function of the output signal of the pressure sensor (9) or upon an actuation of the second brake lever (20) in order to activate the brake system (4) acting on the second wheel (2), **characterised in that** an antilock sensor (16, 17) is associated with the two wheels (1, 2) and is connected by control lines (18, 19) to the controller (12), and **in that** arranged in the hydraulic line (5) is a pressure reducing device (8), which is connected upstream of the pressure sensor (9) and connected by a control line (10) to the controller (12), the controller (12) controlling the actuator (14) as a function of the output signal of the pressure sensor (9) in such a way that in the second brake system (4) acting on the second wheel (2), the brake force corresponding to an optimal distribution is produced, and **in that** upon a change in the brake force produced in the first brake system (3), the brake force produced in the second brake system (4) is changed in such a way that the ideal dynamic distribution of the brake force is retained.

2. An integral brake system according to claim 1, **characterised in that** the actuator (14) is configured as a pump or as an electric brake cylinder and is connected by a hydraulic line (13) to the second brake system (4) acting on the second wheel (2).

3. An integral brake system according to claim 1, **characterised in that** the actuator (14) is an electric servomotor, which is mechanically connected to the second brake system (4) acting on the second wheel (2).

4. An integral brake system according to any one of the preceding claims, **characterised in that** the first wheel (1) is the front wheel and the second wheel (2) is the rear wheel.

5. An integral brake system according to any one of the preceding claims, **characterised in that** if there is a failure of the system (9, 12, 14), the functionality of the hydraulic first brake system (3) is retained.

## Revendications

1. Système de freinage intégral pour motocyclettes comprenant :
- une première installation de frein (3), hydraulique agissant sur une première roue (1), cette installation étant reliée par une conduite hydraulique (5) à un maître-cylindre de frein (6), commandé à partir d'un premier levier de frein (7),
- une seconde installation de frein (4) agissant sur la seconde roue (2), à laquelle est associé un actionneur (14) commandé à la fois par le premier levier de frein (7) et par un second levier de frein (20),
- une installation de régulation (12) pour répartir de manière commandée la force de freinage entre les deux roues (1, 2), ainsi qu'un appareil de commande électronique (12) comportant une installation de régulation qui est reliée par des lignes de commande électriques (11, 15, 21) à un capteur (9) répondant à la pression dans la conduite hydraulique (5), à l'actionneur (14) et au second levier de frein (20),
- l'appareil de commande (12) commandant l'actionneur (14) en fonction du signal de sortie du capteur de pression (9) ou en cas d'actionnement du second levier de frein (20), il active l'installation de frein (4) agissant sur la seconde roue (2),
**caractérisé en ce que**
- les deux roues (1, 2) comportent chacune un capteur antiblocage (16, 17) relié par des lignes de commande (18, 19) à l'appareil de commande (12), et
- la conduite hydraulique (5) comporte une installation de réduction de pression (8) en amont du capteur de pression (9), cette installation étant reliée à l'appareil de commande (12) par une ligne de commande (10),
- l'appareil de commande (12) commandant l'actionneur (14) en fonction du signal de sortie fourni par le capteur de pression (9), de façon que dans la seconde installation de frein (4) agissant sur la seconde roue (2), il génère une force de freinage correspondant à une répartition optimale, et
- en cas de variation de la force de freinage générée dans l'installation de frein (3), la force de freinage générée dans la seconde installation de frein (4), est modifiée pour conserver la répartition dynamique idéale de la force de freinage.

2. Système de freinage intégral selon la revendication 1,
**caractérisé en ce que**
l'actionneur (14) est une pompe ou un cylindre de frein électrique et il est relié par une conduite hydraulique (13) à la seconde installation de frein (4) agissant sur la seconde roue (2).

3. Système de freinage intégral selon la revendication 1,
**caractérisé en ce que**
l'actionneur (14) est un moteur de réglage électrique relié mécaniquement à la seconde installation de frein (4) agissant sur la seconde roue (2).

4. Système de freinage intégral selon l'une des revendications précédentes,
**caractérisé en ce que**
la première roue (1) est la roue avant et la seconde roue (2) est la roue arrière.

5. Système de freinage intégral selon l'une des revendications précédentes,
**caractérisé en ce qu'**
en cas de défaillance du système (9, 12, 14), la première installation de frein hydraulique (3) conserve son aptitude au fonctionnement.
